# FASCICULE DE BREVET EUROPEEN

(11) **EP 3 234 773 B1**
(45) Date de publication et mention de la délivrance du brevet: **24.07.2019**
(21) Numéro de dépôt: 15808587.8
(22) Date de dépôt: 11.12.2015
(51) Int. Cl.: G06F 9/48

(54) **PROCEDE D'ORDONNANCEMENT D'UN TRAITEMENT AUDIO D'UN VEHICULE AUTOMOBILE ET SYSTEME D'EXPLOITATION ASSOCIE**
VERFAHREN ZUR PLANUNG EINER AUDIOBEHANDLUNG EINES KRAFTFAHRZEUGS UND ZUGEHÖRIGES BETRIEBSSYSTEM
METHOD FOR SCHEDULING AN AUDIO TREATMENT OF A MOTOR VEHICLE, AND ASSOCIATED OPERATING SYSTEM

(30) Priorité: 16.12.2014 FR 1462544
(43) Date de publication de la demande: 25.10.2017
(73) Titulaire: Arkamys, 75017 Paris (FR)
(72) Inventeur: BOURMEYSTER, Yvan, 75015 Paris (FR)
(74) Mandataire: Ipside
(86) Numéro de dépôt international: PCT/EP2015/079439
(87) Numéro de publication internationale: WO 2016/096656

(56) Documents cités:
- US-A- 6 086 628
- US-B1- 6 594 773
- GEILEN M ET AL: "Worst-case performance analysis of Synchronous Dataflow scenarios", 2010 IEEE/ACM/IFIP INTERNATIONAL CONFERENCE ON HARDWARE/SOFTWARE CODESIGN AND SYSTEM SYNTHESIS (CODES+ISSS) IEEE PISCATAWAY, NJ, USA, 2010, pages 125-134, XP002751095, ISBN: 978-1-60558-905-3

## Description

### Domaine de l'invention

La présente invention concerne un procédé d'ordonnancement d'un traitement audio d'un véhicule automobile ainsi que le système d'exploitation associé.

L'invention trouve une application particulièrement avantageuse pour les véhicules automobiles comportant une architecture audio très riche et variée.

### Etat de la technique

Les véhicules automobiles intègrent de plus en plus de flux audio en provenance de sources différentes et à destination de périphériques distincts. Par exemple, un véhicule automobile peut comporter des moyens de traitement et de lecture de flux audio en provenance d'un lecteur CD, d'un lecteur MP3, d'un autoradio, d'un GPS intégré et d'une entrée Bluetooth. Ces flux audio peuvent être diffusés sur deux hauts parleurs avant, un caisson centrale, deux haut parleurs arrières et/ou un kit main libre pour le conducteur.

Un processeur de signal numérique est classiquement mis en oeuvre pour traiter les différents flux audio. Un processeur de signal numérique (également appelé DSP pour « Digital Signal Processor » dans la littérature anglo-saxonne) est un microprocesseur optimisé pour exécuter des applications de traitement numérique du signal (filtrage, extraction de signaux, etc.) le plus rapidement possible.

Depuis l'avènement des systèmes ouverts, l'augmentation des performances des processeurs et des capacités de virtualisation de ces processeurs, certains traitements audio sont effectués sur un processeur principal du véhicule. Par exemple, les véhicules automobiles comportent généralement un processeur dédié pour la gestion du CAN (bus automobile) gérant les fonctions vitales du véhicule automobile et capable de simuler l'utilisation d'un processeur de signal numérique.

Les traitements audio sont programmés sur le processeur principal sous la forme de fonctions élémentaires par analogie avec les traitements audio antérieurement réalisés physiquement par le ou les processeurs de signal numérique. Chaque fonction élémentaire comporte au moins une entrée, ou au moins une sortie et une fréquence d'échantillonnage générée par une horloge souche. Une « horloge souche » représente une horloge matériel de bas niveau (également appelé « hardware » dans la littérature anglo-saxonne) permettant de générer une ou plusieurs fréquence d'échantillonnage. Le processeur principal est également relié à une pluralité d'entrées et de sorties, chaque entrée/sortie comportant une taille de trame et une fréquence d'échantillonnage générée par une horloge souche.

La mise en oeuvre de ces fonctions élémentaires par le processeur principal est effectuée en fonction des besoins des entrées ou des sorties par un ordonnancement spécifique. La théorie de l'ordonnancement est une branche de la recherche opérationnelle qui s'intéresse au calcul de dates d'exécution optimales de tâches. Pour cela, il est très souvent nécessaire d'affecter en même temps les ressources nécessaires à l'exécution de ces tâches. Un problème d'ordonnancement peut être considéré comme un sous-problème de planification dans lequel il s'agit de décider de l'exécution opérationnelle des tâches planifiées.

Dans les systèmes de l'art antérieur, l'ordonnancement des taches du processeur est donc induit en fonction des besoins des entrées ou des sorties de l'architecture audio du véhicule automobile. Lorsqu'une entrée arrive, elle est traitée comme par le processeur principal comme sur un processeur de signal numérique.

Cependant, cet ordonnancement des fonctions élémentaires ne permet pas de traiter efficacement les flux audio entrant qui sont régulièrement décalés entre eux. Par exemple, lorsque le Bluetooth est activé pour diffuser une communication vocale au conducteur et que d'autres flux audio sont traités en même temps, certains flux audio subissent des décalages du fait de la différence d'apparition des flux audio et de la différence entre les horloges souches des différentes entrées.

Une autre solution est envisagée dans le document US 6 594 773 qui propose de reconfigurer la taille des trames audio afin de ne pas dépasser un temps de latence donné pour l'ensemble des traitements audio à effectuer.

### Exposé de l'invention

La présente invention vise à remédier aux inconvénients de l'art antérieur en proposant un procédé d'ordonnancement d'un traitement audio d'un véhicule automobile conduit en fonction d'une simulation d'un cas particulièrement défavorable dans lequel toutes les entrées/sorties sont utilisées.

A cet effet, selon un premier aspect, l'invention concerne un procédé d'ordonnancement d'un traitement audio d'un véhicule automobile, ledit traitement audio comportant une pluralité de fonctions élémentaires mises en oeuvre par un microprocesseur, chaque fonction élémentaire comportant au moins une entrée, ou au moins une sortie et une fréquence d'échantillonnage générée par une horloge souche, et une pluralité d'entrées et de sorties, chaque entrée/sortie comportant une taille de trame et une fréquence d'échantillonnage générée par une horloge souche, le procédé comportant les étapes suivantes : regrouper, dans des domaines de synchronicité, les fonctions élémentaires dont les horloges souches sont synchrones, calculer un temps de traitement maximum correspondant au temps nécessaire d'une part pour traiter toutes les trames des entrées par les fonctions élémentaires alors que les entrées/sorties sont produites séquentiellement, et d'autre part pour que les fonctions élémentaires retrouvent leurs états initiaux, et déterminer un ordonnancement des fonctions élémentaires de chaque domaine de synchronicité en fonction du temps de traitement maximum.

L'invention permet de réduire efficacement les latences améliorant ainsi la réactivité du système et permettant de répondre aux normes de réactivité imposées dans certains pays, dont la France. L'invention permet également de réduire le temps de développement et d'implantation des systèmes audio.

Selon un mode de réalisation, le procédé comporte également une étape consistant à relier les domaines de synchronicité entre eux par des convertisseurs de fréquence d'échantillonnage asynchrone.

Selon un mode de réalisation, seul l'ordonnancement des entrées/sorties est stocké. L'ordonnancement des fonctions élémentaires étant obtenu de manière unique et reproductible du fait de l'ordonnancement des entrées/sorties et de priorités relatives attribuées à chacune des fonctions élémentaires. L'invention permet ainsi d'obtenir un graphe descriptif conduit par le service comparativement à un graphe descriptif induit par l'apparition des entrées/sorties.

Selon un mode de réalisation, le graphe descriptif est stocké dans un fichier reconfigurable. L'architecture audio du véhicule est alors plus flexible en termes de modification structurelle et de mise à jour.

Selon un deuxième aspect, l'invention concerne un système d'exploitation comportant un cadriciel comportant des moyens pour regrouper, dans des domaines de synchronicité, des fonctions élémentaires dont les horloges souches sont synchrones, calculer un temps de traitement maximum correspondant au temps nécessaire d'une part pour traiter des trames des entrées par les fonctions élémentaires alors que des entrées/sorties sont produites séquentiellement, et d'autre part pour que les fonctions élémentaires retrouvent un état initial, et déterminer un ordonnancement des fonctions élémentaires de chaque domaine de synchronicité en fonction du temps de traitement maximum.

Selon un mode de réalisation, le système comporte un fichier contenant un graphe descriptif d'un ordonnancement des fonctions élémentaires, un service apte à interpréter ledit graphe descriptif en fonction des entrées et des sorties, et des composants structurels commandés par ledit service et aptes à effectuer des traitements audio.

Selon un mode de réalisation, le système comporte des moyens de démarrage anticipé du service lors du démarrage du système. Ce mode de réalisation permet d'améliorer la réactivité du système audio au cours du processus de démarrage.

### Brève description des dessins

On comprendra mieux l'invention à l'aide de la description, faite ci-après à titre purement explicatif, des modes de réalisation de l'invention, en référence aux Figures dans lesquelles :
- la Figure 1 illustre une représentation structurelle d'un système d'exploitation mettant en oeuvre le procédé d'ordonnancement selon un mode de réalisation de l'invention ;
- la Figure 2 illustre une représentation structurelle du cadriciel de la Figure 1 ; et
- la Figure 3 illustre une représentation schématique d'un procédé d'ordonnancement selon un mode de réalisation de l'invention.

### Description détaillée des modes de réalisation de l'invention

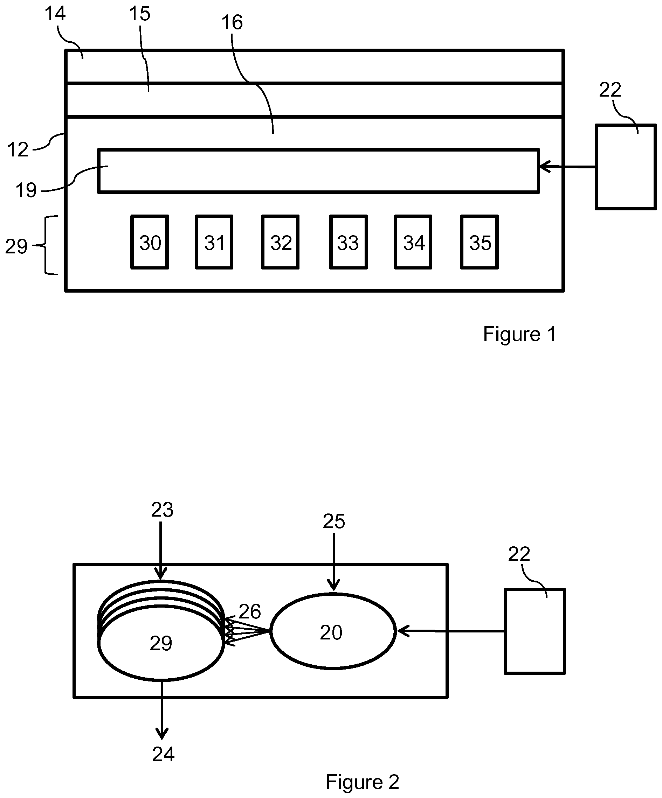

Les Figures 1 à 3 illustrent un procédé d'ordonnancement 10 d'un traitement audio d'un véhicule automobile comprenant une pluralité de fonctionnalités audio intégrées dans un système d'exploitation 12 sous la forme de fonctions élémentaires 32. L'invention peut être implantée sur tous les systèmes d'exploitation enrichis tels que Linux ou Android. Par exemple, le système d'exploitation 12 peut tourner sur un processeur de type ARM (marque déposée) ou Cortex (marque déposée). Le système d'exploitation 12 comprend un niveau d'application 14 puis un sous niveau d'application multimédia 15 et enfin un sous niveau de traitement audio 16 intégrant le traitement audio selon l'invention.

Ce niveau de traitement audio 16 comprend un cadriciel 19 (communément appelé « framework » dans la littérature anglo-saxonne) regroupant un ensemble de composants structurels 29. En programmation informatique, un cadriciel est un ensemble cohérent de composants logiciels structurels, qui sert à créer les fondations ainsi que les grandes lignes de tout ou d'une partie d'un logiciel (architecture). Ce cadriciel 19 est représenté sur la Figure 2 par un service 20 (communément appelé « daemon » dans la littérature anglo-saxonne) transmettant des signaux de commande 26 aux composants structurels 29. Le service 20 est commandé par le système d'exploitation 12 par l'intermédiaire d'un service de contrôle 25 et son comportement est dicté par un graphe descriptif 22.

Les composants structurels 29 traitent les données de l'application 23 jusqu'à ce que ces données soient transmisses à un périphérique audio 24 en vue de leur diffusion. Les composants structurels 29 comprennent deux modules 30, 35 d'entrées/sorties. Les signaux d'entrée peuvent provenir d'un périphérique Bluetooth, d'une module de diffusion domotique, d'un lecteur de musique multimédia, d'un microphone, d'un lecteur CD ou encore d'un lecteur DVD. Les signaux de sortie peuvent être transmis à un périphérique connecté en Bluetooth, à un ou plusieurs hauts parleurs ou à un périphérique connecté à une interface multimédia haute définition. Ses entrées et ses sorties présentent des tailles de trame et des fréquences d'échantillonnages qui peuvent être différentes. En outre, les fréquences d'échantillonnages de chaque entrée/sortie sont générées par une horloge souche qui peut varier entre plusieurs entrées/sorties. Une « horloge souche » représente une horloge matériel de bas niveau (ou « hardware » dans la littérature anglo-saxonne).

Les composants structurels 29 comprennent également un convertisseur de fréquences 31 logiciel et/ou matériel. Les traitements audio sont effectués par des fonctions élémentaires 32 et/ou des fonctions de spatialisation du son 33 à l'intérieur du véhicule et/ou des fonctions d'intégration d'effets audio avancés 34. Les fonctions 32-33 interviennent généralement à un stade avancé de la chaine de traitement audio alors que les fonctions élémentaires 32 interviennent au début de la chaine de traitement audio. Les fonctions élémentaires 32 regroupent des traitements très divers tels que les amplificateurs, les filtres, les multiplexeurs, les démultiplexeurs, les déphaseurs, les égaliseurs, les limiteurs. Ainsi ses fonctions sont très hétérogènes structurellement car certaines nécessitent un signal en entrée et fournissent un signal en sortie alors que d'autres nécessitent deux signaux en entrée et fournissent un signal en sortie et d'autres encore nécessitent un signal en entrée et fournissent deux signaux en sortie. De plus, ces fonctions utilisent différentes tailles de trame en entrée et en sortie et différentes fréquences d'échantillonnage. En outre, les fréquences d'échantillonnages de chaque composant structurel 29 sont générées par une horloge souche qui peut varier entre plusieurs composants structurels 29.

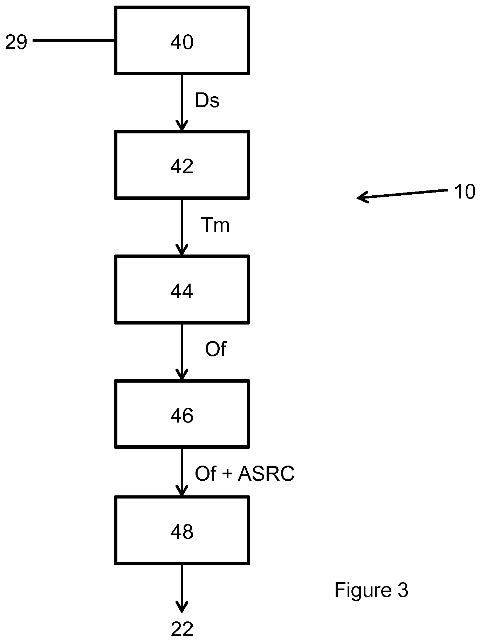

Le procédé d'ordonnancement 10 de l'invention illustré sur la Figure 3 permet de définir le graphe descriptif 22 en fonction des caractéristiques des composants structurels 29 mis en oeuvre. La théorie de l'ordonnancement est une branche de la recherche opérationnelle qui s'intéresse au calcul de dates d'exécution optimales de tâches. Pour cela, il est très souvent nécessaire d'affecter en même temps les ressources nécessaires à l'exécution de ces tâches. Un problème d'ordonnancement peut être considéré comme un sous-problème de planification dans lequel il s'agit de décider de l'exécution opérationnelle des tâches planifiées.

Le procédé d'ordonnancement 10 comporte une première étape consistant à regrouper 40 les fonctions élémentaires 32 dont les horloges souches sont synchrones dans des domaines de synchronicité Ds. Il existe en générale deux ou trois domaines de synchronicité Ds mais cela peut varier en fonction des fonctions élémentaires 32 implantées. Une seconde étape consiste à calculer 42 un temps de traitement maximum Tm. Pour cette étape, l'activité des entrées/sorties du 30, 35 est simulée pour un cas idéal dans lequel les entrées/sorties sont produites séquentiellement. Le temps de traitement des entrées/sorties est déterminé en fonction de la fréquence d'échantillonnage et de la taille de trame de chaque entrée/sortie. Ce traitement des entrées/sorties est effectué jusqu'au temps de traitement maximum Tm nécessaire afin que les fonctions élémentaires 32 retrouvent leur état initial.

Une étape suivante consiste à déterminer 44 un ordonnancement Of des fonctions élémentaires 32 de chaque domaine de synchronicité Ds en fonction du temps de traitement maximum Tm. L'ordonnancement des fonctions élémentaires d'un domaine de synchronicité est rendu unique et toujours reproductible. Il est obtenu par la coexistence des éléments suivants : le séquencement des entrées/sorties dans le temps Tm ; les priorités relatives données à chaque fonction élémentaire 32 ; la disponibilité des données en entrée des fonctions élémentaires 32 ; et la possibilité d'évacuer les données en sortie des fonctions élémentaires 32. L'état de disponibilité des données en entrée et de possibilité d'évacuer des données en sortie est cyclique de sorte qu'on retrouve le même état initial pour toutes les fonctions élémentaires. Ce cycle est un multiple du temps Tm.

Une étape suivante consiste à relier 46 les domaines de synchronicité Ds entre eux pas des convertisseurs de fréquence d'échantillonnage asynchrone (ASRC pour « asynchrone sampling rate converter » dans la littérature anglo-saxonne). La dernière étape consiste à stocker 48 l'ordonnancement Of des entrées/sorties ainsi que les priorités relatives entre les fonctions élémentaires 32 afin que l'ordonnancement puisse commander les actions du service 20. De préférence, le graphe descriptif 22 est stocké dans un fichier reconfigurable. Par exemple, le graphe descriptif 22 peut être codé dans un fichier de type XML pour « Extensible Markup Language » ou « langage de balisage extensible » en français. La redéfinition du graphe descriptif 22 peut intervenir si l'utilisateur télécharge une nouvelle application qui n'était pas connu lors de la précédente mise en oeuvre du procédé d'ordonnancement 10 ou si l'utilisateur apporte des modifications structurelles à l'architecture audio du véhicule automobile.

L'invention permet ainsi d'obtenir un graphe descriptif 22 conduit par le service 20 comparativement à un graphe descriptif induit par l'apparition des entrées/sorties. L'invention permet de réduire et de contrôler efficacement les latences améliorant ainsi la réactivité du système et permettant de répondre aux normes de réactivité imposées dans certains pays, dont la France. Certains segments du graphe peuvent bénéficier de latences minimales du fait de leur priorité sur d'autres segments. L'invention permet également de réduire le temps de développement et d'implantation des systèmes audio. L'architecture audio du véhicule est alors plus flexible en termes de modification structurelle et de mise à jour. L'ordonnancement étant cyclique (n^{∗}Tm), le système revient au bout d'un cycle dans le même état que l'état initial, ce pour toutes les entrées/sorties et pour toutes les fonctions élémentaires 32. Ainsi en s'assurant que l'ordonnancement ne produit pas de blocage dans l'ordonnancement dans un cycle, il est possible de s'assurer qu'il ne se produira jamais de blocage et d'obtenir un système temps réel. En outre, le système d'exploitation 12 peut comporter un moyen de démarrage anticipé du service 20 lors du démarrage du système d'exploitation 12 permettant d'améliorer également la réactivité du système audio.

## Revendications

1. Procédé d'ordonnancement (10) d'un traitement audio d'un véhicule automobile, ledit traitement audio comportant :
- une pluralité de fonctions élémentaires (32) mises en oeuvre par un microprocesseur, chaque fonction élémentaire (32) comportant au moins une entrée, ou au moins une sortie et une fréquence d'échantillonnage générée par une horloge souche, et
- une pluralité d'entrées et de sorties, chaque entrée/sortie comportant une taille de trame et une fréquence d'échantillonnage générée par une horloge souche,
**caractérisé en ce que** le procédé comporte les étapes suivantes :
- regrouper (40), dans des domaines de synchronicité (Ds), les fonctions élémentaires (32) dont les horloges souches sont synchrones,
- calculer (42) un temps de traitement maximum (Tm) correspondant au temps nécessaire d'une part pour traiter toutes les trames des entrées par les fonctions élémentaires (32) alors que les entrées/sorties sont produites séquentiellement, et d'autre part pour que les fonctions élémentaires (32) retrouvent leurs états initiaux, et
- déterminer (44) un ordonnancement (Of) des fonctions élémentaires (32) de chaque domaine de synchronicité (Ds) en fonction du temps de traitement maximum (Tm).

2. Procédé d'ordonnancement selon la revendication 1, **caractérisé en ce qu'**il comporte également une étape consistant à relier (46) les domaines de synchronicité (Ds) entre eux par des convertisseurs de fréquence d'échantillonnage asynchrone (ASRC).

3. Procédé d'ordonnancement selon la revendication 1 ou 2, **caractérisé en ce que** seul l'ordonnancement (Of) des entrées/sorties est stocké.

4. Procédé d'ordonnancement selon la revendication 3, **caractérisé en ce que** le graphe descriptif (22) est stocké dans un fichier reconfigurable.

5. Système d'exploitation comportant un cadriciel (19) comportant des moyens adaptés pour ordonnancer un traitement audio d'un véhicule automobile, le dit traitement audio comportant:
- une pluralité de fonctions élémentaires mises en oeuvre par un microprocesseur, chaque fonction élémentaire comportant au moins une entrée, ou au moins une sortie et une fréquence d'échantillonnage générée par une horloge souche, et
- une pluralité d'entrées et de sorties, chaque entrée/sortie comportant une taille de trame et une fréquence d'échantillonnage générée par une horloge souche,
ainsi que des moyens pour:
- regrouper (40), dans des domaines de synchronicité (Ds), des fonctions élémentaires (32) dont les horloges souches sont synchrones,
- calculer (42) un temps de traitement maximum (Tm) correspondant au temps nécessaire d'une part pour traiter des trames des entrées par les fonctions élémentaires (32) alors que des entrées/sorties sont produites séquentiellement, et d'autre part pour que les fonctions élémentaires (32) retrouvent un état initial, et
- déterminer (44) un ordonnancement (Of) des fonctions élémentaires (32) de chaque domaine de synchronicité (Ds) en fonction du temps de traitement maximum (Tm).

6. Système selon la revendication 5, **caractérisé en ce qu'**il comporte :
- un fichier contenant un graphe descriptif (22) d'un ordonnancement (Of) des fonctions élémentaires (32),
- un service (20) apte à interpréter ledit graphe descriptif (22) en fonction des entrées et des sorties, et
- des composants structurels (29) commandés par ledit service (20) et aptes à effectuer des traitements audio.

7. Système selon la revendication 6, **caractérisé en ce qu'**il comporte des moyens de démarrage anticipé du service (20) lors du démarrage du système.

## Patentansprüche

1. Verfahren zur Planung (10) einer Audiobehandlung eines Kraftfahrzeuges, wobei die Audiobehandlung Folgendes umfasst:
- eine Vielzahl von elementaren Funktionen (32), die von einem Mikroprozessor durchgeführt werden, wobei jede elementare Funktion (32) mindestens einen Eingang oder mindestens einen Ausgang und eine Abtastrate umfasst, die von einer Stammuhr erzeugt wurde, und
- eine Vielzahl von Eingängen und Ausgängen, wobei jeder Eingang/Ausgang eine Framegröße und eine Abtastrate umfasst, die von einer Stammuhr erzeugt wurde,
**dadurch gekennzeichnet, dass** das Verfahren die folgenden Schritte umfasst:
- Umgruppieren (40), in Synchronitätsdomänen (Ds), der elementaren Funktionen (32), von denen die Stammuhren synchronisiert werden,
- Berechnen (42) einer maximalen Behandlungszeit (Tm), die einerseits der Zeit entspricht, die erforderlich ist, um alle Eingangsframes durch die elementaren Funktionen (32) zu behandeln, während die Eingänge/Ausgänge sequenziell erzeugt werden, und andererseits, damit die elementaren Funktionen (32) in ihre anfänglichen Zustände zurückkehren, und
- Bestimmen (44) einer Planung (Of) der elementaren Funktionen (32), jeder Synchronitätsdomäne (Ds) je nach der maximalen Behandlungszeit (Tm).

2. Verfahren zur Planung nach Anspruch 1, **dadurch gekennzeichnet, dass** es auch einen Schritt umfasst, der darin besteht, die Synchronitätsdomänen (Ds) untereinander durch asynchrone Abtastratenwandler (ASRC) zu verbinden (46).

3. Verfahren zur Planung nach Anspruch 1 oder 2, **dadurch gekennzeichnet, dass** nur die Planung (Of) der Eingänge/Ausgänge gespeichert wird.

4. Verfahren zur Planung nach Anspruch 3, **dadurch gekennzeichnet, dass** der beschreibende Graph (22) in einer rekonfigurierbaren Datei gespeichert wird.

5. Betriebssystem, umfassend ein Programmiergerüst (19), umfassend Mittel, die ausgelegt sind, um eine Audiobehandlung eines Kraftfahrzeugs zu planen, wobei die Audiobehandlung Folgendes umfasst:
- eine Vielzahl von elementaren Funktionen, die von einem Mikroprozessor durchgeführt werden, wobei jede elementare Funktion mindestens einen Eingang oder mindestens einen Ausgang und eine Abtastrate umfasst, die von einer Stammuhr erzeugt wurde, und
- eine Vielzahl von Eingängen und Ausgängen, wobei jeder Eingang/Ausgang eine Framegröße und eine Abtastrate umfasst, die von einer Stammuhr erzeugt wurde,
ebenso wie zugehörige Mittel, um:
- in Synchronitätsdomänen (Ds) elementaren Funktionen (32) umzugruppieren (40), von denen die Stammuhren synchronisiert werden,
- eine maximale Behandlungszeit (Tm) zu berechnen (42), die einerseits der Zeit entspricht, die erforderlich ist, um Eingangsframes durch die elementaren Funktionen (32) zu behandeln, während Eingänge/Ausgänge sequenziell erzeugt werden, und andererseits, damit die elementaren Funktionen (32) in einen anfänglichen Zustand zurückkehren, und
- eine Planung (Of) der elementaren Funktionen (32) jeder Synchronitätsdomäne (Ds) je nach der maximalen Behandlungszeit (Tm) zu bestimmen (44).

6. System nach Anspruch 5, **dadurch gekennzeichnet, dass** es Folgendes umfasst:
- eine Datei, enthaltend einen beschreibenden Graphen (22) einer Planung (Of) der elementaren Funktionen (32),
- einen Service (20), der ausgelegt ist, um den beschreibenden Graphen (22) je nach den Eingängen und Ausgängen zu interpretieren, und
- strukturelle Komponenten (29), die vom Service (20) gesteuert werden und ausgelegt sind, um Audiobehandlungen durchzuführen.

7. System nach Anspruch 6, **dadurch gekennzeichnet, dass** es Mittel zum vorweggenommenen Start des Services (20) beim Start des Systems umfasst.

## Claims

1. Method (10) for scheduling audio processing of a motor vehicle, said audio processing comprising:
- a plurality of elementary functions (32) implemented by a microprocessor, each elementary function (32) comprising at least one input, or at least one output and a sampling rate generated by a hardware clock, and
- a plurality of inputs and outputs, each input/output comprising a frame size and a sampling rate generated by a hardware clock,
**characterised in that** the method comprises the following steps:
- grouping together (40), in synchronicity domains (Ds), elementary functions (32) having hardware clocks that are synchronous,
- calculating (42) a maximum processing time (Tm) corresponding to the time necessary on the one hand to process all the frames of the inputs by the elementary functions (32) whereas the inputs/outputs are produced sequentially, and on the other hand in order for the elementary functions (32) to return to their initial states, and
- determining (44) a scheduling (Of) of the elementary functions (32) of each synchronicity domain (Ds) according to the maximum processing time (Tm).

2. Scheduling method according to claim 1, **characterised in that** it also comprises a step involving connecting (46) the synchronicity domains (Ds) to each other by asynchronous sampling rate converters (ASRC).

3. Scheduling method according to claim 1 or 2, **characterised in that** only the scheduling (Of) of the inputs/outputs is stored.

4. Scheduling method according to claim 3, **characterised in that** the descriptive graph (22) is stored in a file that can be reconfigured.

5. Operating system comprising a framework (19) comprising means adapted to schedule audio processing of a motor vehicle, said audio processing comprising:
- a plurality of elementary functions implemented by a microprocessor, each elementary function comprising at least one input, or at least one output and a sampling rate generated by a hardware clock, and
- a plurality of inputs and outputs, each input/output comprising a frame size and a sampling rate generated by a hardware clock,
as well as means for:
- grouping together (40), in synchronicity domains (Ds), elementary functions (32) having hardware clocks that are synchronous,
- calculating (42) a maximum processing time (Tm) corresponding to the time necessary on the one hand to process frames of the inputs by the elementary functions (32) whereas inputs/outputs are produced sequentially, and on the other hand in order for the elementary functions (32) to return to an initial state, and
- determining (44) a scheduling (Of) of the elementary functions (32) of each synchronicity domain (Ds) according to the maximum processing time (Tm).

6. System according to claim 5, **characterised in that** it comprises:
- a file containing a descriptive graph (22) of a scheduling (Of) of the elementary functions (32),
- a service (20) capable of interpreting said descriptive graph (22) according to the inputs and the outputs, and
- structural components (29) controlled by said service (20) and capable of carrying out audio processing.

7. System according to claim 6, **characterised in that** it comprises means for prestart of the service (20) during system startup.
